# EUROPÄISCHE PATENTSCHRIFT

(11) **EP 2 208 281 B1**
(45) Veröffentlichungstag und Bekanntmachung des Hinweises auf die Patenterteilung: **14.02.2018**
(21) Anmeldenummer: 08844516.8
(22) Anmeldetag: 29.10.2008
(51) Int. Cl.: H02J 7/35, H02J 3/38

(54) **PHOTOVOLTAIK-WECHSELRICHTEREINHEIT MIT UMSCHALTMÖGLICHKEIT ZWISCHEN EINEM STROMVERSORGUNGSNETZ FESTER FREQUENZ UND EINER LAST VARIABLER FREQUENZ**
PHOTOVOLTAIC INVERTER UNIT WITH OPTION FOR SWITCHING BETWEEN A POWER SUPPLY SYSTEM WITH A FIXED FREQUENCY AND A LOAD VARIABLE FREQUENCY
UNITÉ ONDULEUR PHOTOVOLTAÏQUE PRÉSENTANT UNE POSSIBILITÉ DE COMMUTATION ENTRE UN RÉSEAU D'ALIMENTATION ÉLECTRIQUE À FRÉQUENCE FIXE ET UNE CHARGE À FRÉQUENCE VARIABLE

(30) Priorität: 31.10.2007 DE 102007052301
(43) Veröffentlichungstag der Anmeldung: 21.07.2010
(73) Patentinhaber: Kostal Industrie Elektrik GmbH, 58513 Lüdenscheid (DE)
(72) Erfinder: OESTERLEIN, Marco, 58332 Schwelm (DE)
(74) Vertreter: Kerkmann, Detlef
(86) Internationale Anmeldenummer: PCT/EP2008/064687
(87) Internationale Veröffentlichungsnummer: WO 2009/056573

(56) Entgegenhaltungen:
- WO-A1-2006/050878
- US-A1- 2004 207 366
- US-A1- 2005 006 958
- "Preisgekröntes Photovoltaik-System: Solarstromanlage schützt als Backup-System vor Blackouts" DER SOLARSERVER, [Online] 5. Juni 2007 (2007-06-05), Seiten 1-6, XP002520026 Gefunden im Internet: URL:http://www.solarserver.de/solarmagazin /download/preisgekroentes_pv_system_anlage _juni2007.pdf> [gefunden am 2009-03-18]
- "SUNNY BOY 1500" INTERNET CITATION, [Online] XP002453580 Gefunden im Internet: URL:http://web.archive.org/web/20070127083 544/http://www.solaranlagen-onl ine.de/texte/beschreibungSB1500-12ED1098.p df> [gefunden am 2007-10-03]
- EDUARD MULJADI: "PV Water Pumping with a Peak-Power Tracker Using a Simple Six-Step Square-Wave Inverter" IEEE TRANSACTIONS ON INDUSTRY APPLICATIONS, IEEE SERVICE CENTER, PISCATAWAY, NJ, US, Bd. 33, Nr. 3, 1. Juni 1997 (1997-06-01), XP011022211 ISSN: 0093-9994

## Beschreibung

Die vorliegende Erfindung betrifft eine Photovoltaik-Wechselrichtereinheit mit einem ersten Ausgang zum Anschluss an ein Stromnetz zur Einspeisung elektrischer Energie in das Stromnetz als Wechselspannung mit einer festen Frequenz und mit einem zweiten Ausgang zum Anschluss eines lokalen Verbrauchers, wobei über einen steuerbaren Leistungsschalter zumindest einer der ersten oder der zweiten Ausgänge der Wechselrichtereinheit mit Energie versorgt wird.

Vorbekannte Wechselrichtereinheiten dieser Art weisen ein bis drei Wechselrichterbrückenzweige auf und erzeugen damit eine ein-, zwei- oder dreiphasige Ausgangsspannung mit einer festen Frequenz von in der Regel 50 oder 60 Hertz. Diese Ausgangsspannung wird über den Ausgang der Wechselrichtereinheit in ein lokales oder öffentliches Stromnetz eingespeist.

Zur Erhöhung der Energieausbeute der Photovoltaik-Anlagen gegenüber starr montierten Solarmodulen weisen sogenannte nachgeführte Anlagen mechanische Verstelleinrichtungen auf, die eine Nachführung der Ausrichtung der Solarmodule nach dem sich im Laufe eines Tages ändernden Stand der Sonne erlauben. Die zum Antrieb dieser Verstelleinrichtungen zumeist eingesetzten Elektromotoren werden dabei wiederum aus dem Stromnetz mit Energie versorgt.

In der DE 199 37 410 A1 ist die Schaltungsanordnung eines Solarwechselrichters beschrieben, der ausgangsseitig drei Wechselrichterbrückenzweige zur Erzeugung eines Dreiphasenwechselstroms aufweist.

Die US 2005/0006958 A1 zeigt eine netzgekoppelte Photovoltaik-Einrichtung mit einer Übertragungseinrichtung, die neben einem Ausgang zur Einspeisung elektrischer Energie in das Stromnetz als Wechselspannung mit einer festen Frequenz auch einen zweiten Ausgang zum Anschluss eines Verbrauchers aufweist. Die Übertragungseinrichtung ist dabei so ausgelegt, dass über diese steuerbar zumindest einer der beiden Ausgänge mit Energie versorgt wird.

Die WO 2006/050878 A1 zeigt einen Standard-Frequenzumrichter, dessen Leistungselektronik eine Regeleinrichtung umfasst, die Betriebsparameter einer den Frequenzumrichter diskontinuierlich speisenden Energiequelle regelt.

Die Photovoltaik-Wechselrichtereinheit gemäß der vorliegenden Erfindung hat gegenüber vorbekannten Einrichtungen der genannten Art den Vorteil, neben der Einspeisung der Energie in ein lokales oder öffentliches Stromnetz über einen zweiten Ausgang zeitversetzt oder gemäß einer Weiterbildung auch gleichzeitig hierzu ebenfalls Energie für die Versorgung lokaler Verbraucher direkt zur Verfügung stellen zu können, etwa um einen Elektromotor, insbesondere eine Asynchronmaschine, zur Verstellung einer Nachführeinrichtung zu betreiben.

Dies wird erfindungsgemäß dadurch ermöglicht, dass die Wechselrichtereinheit zumindest einen Wechselrichterbrückenzweig aufweist, dessen Ausgang durch einen Leistungsschalter wahlweise mit dem ersten oder mit dem zweiten Ausgang der Wechselrichtereinheit verbunden wird, und dass die Wechselrichtereinheit eine Steuereinrichtung umfasst, die die Ausgabe einer Wechselspannung mit variabler Frequenz zur Ansteuerung eines Elektromotors über den zweiten Ausgang ermöglicht.

In einer vorteilhaften Ausführungsform der erfindungsgemäßen Wechselrichtereinheit ist vorgesehen, dass die Steuereinrichtung auch den/die dem/den Wechselrichterbrückenzweig(en) ausgangsseitig nachgeschaltete(n) Leistungsschalter zur Auswahl des jeweils aktiven ersten oder zweiten Ausgangs ansteuert.

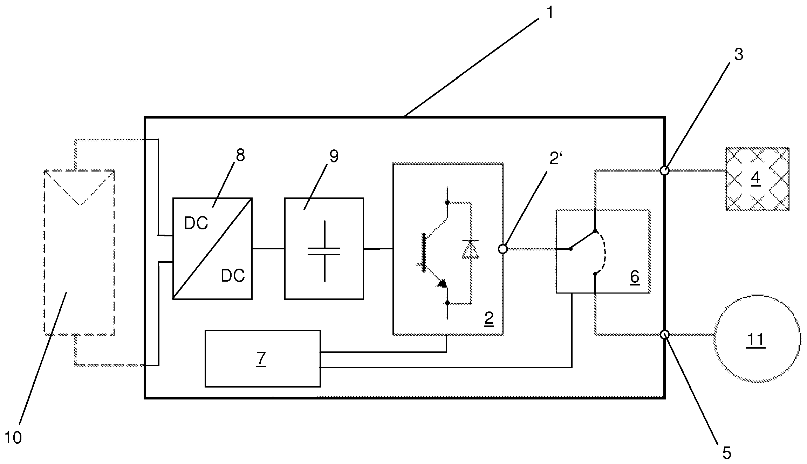

Weitere vorteilhafte Ausgestaltungen und Weiterbildungen der erfindungsgemäßen Photovoltaik-Wechselrichtereinheit werden anhand der Zeichnung erläutert. Dabei zeigt die einzige Figur eine Darstellung einer solchen Einheit als Blockschaltbild.

Die Wechselrichtereinheit (1) ist eingangsseitig mit photovoltaischen Elementen (10) verbunden, die eine Gleichspannung bereitstellen. Bei den photovoltaischen Elementen (10) handelt es sich in der Regel um mehrere Solarzellenmodule, die zu sogenannten Strings in einer Reihenschaltung miteinander verbunden sind. Die durch die photovoltaischen Elemente (10) erzeugte Gleichspannung wird einem Gleichspannungs-/Gleichspannungswandler, im Folgenden kurz als DC/DC-Wandler (8) bezeichnet, zugeführt, der eine Anpassung der Eingangsspannung an die ausgangsseitig am Wechselrichter benötigte Spannungshöhe vornimmt.

Dem DC/DC-Wandler (8) nachgeschaltet ist eine Anordnung aus mehreren Kondensatoren zur Energiespeicherung bzw. -pufferung, die den Gleichspannungs-Zwischenkreis (9) des Wechselrichters ausbildet. Der Gleichspannungs-Zwischenkreis (9) speist mit seinem Ausgang den zumindest einen Wechselrichterbrückenzweig (2), der intern vorzugsweise als Halbbrückenanordnung mit jeweils zwei steuerbaren Halbleiterschaltern ausgebildet ist.

Soll nicht nur ein einphasiger sondern beispielsweise ein dreiphasiger Wechselstrom erzeugt werden, so besitzt der Wechselrichter abweichend von der hier im Blockschaltbild dargestellten Konfiguration mit nur einer Phase anstelle des einen Wechselrichterbrückenzweigs (2) drei identische, parallel zueinander angeordnete Wechselrichterbrückenzweige (2).

Zur Ansteuerung der Wechselrichterbrückenzweige (2) ist eine Steuereinrichtung (7) vorgesehen, die vorteilhafterweise einen Microcontroller aufweist. Die Wechselrichterbrückenzweige (2) sind mit ihren Ausgängen (2') mit jeweils einem Leistungsschalter (6) verbunden, und über diese wahlweise mit einem ersten (3) oder einem zweiten (5) Ausgang der Wechselrichtereinheit (1) verbindbar.

Bei dem Leistungsschalter (6) handelt es sich beispielsweise um ein als Umschalter konzipiertes Relais oder einen Halbleiterschalter, die jeweils durch elektrische Steuerströme beeinflusst eine Umschaltung des Laststrompfades zu dem ersten (3) oder einem zweiten (5) Ausgang der Wechselrichtereinheit (1) vornehmen können.

Dabei dient der erste Ausgang (3) der Wechselrichtereinheit (1) dem Anschluss derselben an ein lokales oder öffentliches Stromnetz (4) zur Einspeisung elektrischer Energie in das Stromnetz (4) als Wechselspannung mit einer festen Frequenz.

Der zweite Ausgang (5) der Wechselrichtereinheit (1) ist zur Ausgabe einer Wechselspannung mit variabler Frequenz vorgesehen, wobei die Steuereinrichtung (7) die Wechselrichterbrückenzweige (2) der Wechselrichtereinheit (1) entsprechend des gewünschten Frequenzgangs ansteuert. So ist etwa ein als Asynchronmotor ausgebildeter Elektromotor (11) zum Antrieb einer mechanischen Verstelleinrichtung, die beispielsweise zur Nachführung der Ausrichtung der Solarmodule vorgesehen sein kann, direkt aus der Wechselrichtereinheit (1) heraus ansteuerbar.

Die Steuereinrichtung (7) steuert neben den Wechselrichterbrückenzweigen (2) auch die diesen ausgangsseitig nachgeschalteten Leistungsschalter (6) zur Auswahl des jeweils aktiven Ausgangs (3, 5) an, wobei bei mehreren Wechselrichterbrückenzweigen (2) auch die Möglichkeit besteht, dass einer oder mehrere dieser Wechselrichterbrückenzweige (2) über den ersten Ausgang (3) der Wechselrichtereinheit (1) mit dem Stromnetz (4) verbunden sind, und elektrische Energie als Wechselspannung mit fester Frequenz in dieses einspeisen, während gleichzeitig einer oder mehrere andere Wechselrichterbrückenzweige (2) über den zweiten Ausgang (5) der Wechselrichtereinheit (1) Wechselspannung mit variabler Frequenz zur Ansteuerung eines Elektromotors (11) ausgeben.

## Patentansprüche

1. Photovoltaik-Wechselrichtereinheit (1) mit einem ersten Ausgang (3) zum Anschluss an ein Stromnetz (4) zur Einspeisung elektrischer Energie in das Stromnetz (4) als Wechselspannung mit einer festen Frequenz und mit einem zweiten Ausgang (5) zum Anschluss eines lokalen Verbrauchers, wobei über einen steuerbaren Leistungsschalter (6) zumindest einer der ersten (3) oder der zweiten (5) Ausgänge der Wechselrichtereinheit (1) mit Energie versorgt wird, **dadurch gekennzeichnet, dass** die Wechselrichtereinheit (1) zumindest einen Wechselrichterbrückenzweig (2) aufweist, dessen Ausgang (2') durch den steuerbaren Leistungsschalter (6) wahlweise mit dem ersten (3) oder mit dem zweiten (5) Ausgang der Wechselrichtereinheit (1) verbunden wird, und dass die Wechselrichtereinheit (1) eine Steuereinrichtung (7) umfasst, die die Ausgabe einer Wechselspannung mit variabler Frequenz zur Ansteuerung eines Elektromotors (11) über den zweiten Ausgang (5) ermöglicht.

2. Photovoltaik-Wechselrichtereinheit nach Anspruch 1, **dadurch gekennzeichnet, dass** die Wechselrichtereinheit (1) zwei oder drei Wechselrichterbrückenzweige (2) umfasst, die mit ihren Ausgängen (2') mit jeweils einem Leistungsschalter (6) verbunden sind, über den sie wahlweise mit dem ersten (3) oder dem zweiten (5) Ausgang der Wechselrichtereinheit (1) verbunden sind.

3. Photovoltaik-Wechselrichtereinheit nach Anspruch 1 oder 2, **dadurch gekennzeichnet, dass** die Steuereinrichtung (7) auch den/die dem/den Wechselrichterbrückenzweig(en) (2) ausgangsseitig nachgeschaltete(n) Leistungsschalter (6) zur Auswahl des jeweils aktiven ersten oder zweiten Ausgangs (3, 5) ansteuert.

4. Photovoltaik-Wechselrichtereinheit nach einem der Ansprüche 1 bis 3, **dadurch gekennzeichnet, dass** dem zumindest einen Wechselrichterbrückenzweig (2) eingangsseitig ein Gleichspannungs-Zwischenkreis (9) und diesem ein DC/DC-Wandler (8) vorgeschaltet sind.

## Claims

1. Photovoltaic inverter unit (1) having a first output (3) for connecting to a power supply system (4) for the purpose of feeding electrical energy into the power supply system (4) as alternating voltage with a fixed frequency, and having a second output (5) for the purpose of connecting a local load,
whereby at least one of the first (3) or second (5) outputs of the inverter unit (1) is provided with power via a controllable circuit breaker (6),
**characterised in that** the inverter unit (1) has at least one inverter bridge arm (2) whose output (2') is connected optionally to the first (3) or to the second (5) output of the inverter unit (1) by means of the controllable circuit breaker (6) and that the inverter unit (1) incorporates a control device (7) which facilitates the output of an alternating voltage with a variable frequency via the second output (5) for the purpose of actuating an electric motor (11).

2. Photovoltaic inverter unit according to Claim 1, **characterised in that** the inverter unit (1) incorporates two or three inverter bridge arms (2) which are connected with their respective outputs (2') to a circuit breaker (6) by way of which they are connected optionally to the first (3) or the second (5) output of the inverter unit (1).

3. Photovoltaic inverter unit according to Claim 1 or Claim 2, **characterised in that** the control device (7) also actuates the circuit breaker or circuit breakers (6) connected in series to the output side of the inverter bridge arm or arms (2) for the purpose of selecting the first or second output (3, 5) which is active in each case.

4. Photovoltaic inverter unit according to any of Claims 1 to 3, **characterised in that** attached to the input side of the at least one inverter bridge arm (2) is a direct voltage intermediate circuit (9) and a DC/DC converter (8) is connected to the same upstream.

## Revendications

1. Unité onduleur photovoltaïque (1), avec une première sortie (3) pour le raccordement à un réseau de courant (4) pour l'alimentation en énergie électrique dans le réseau de courant (4), en tant que tension alternative à fréquence fixe, et avec une deuxième sortie (5) pour le raccordement d'un consommateur local,
sachant que, par l'intermédiaire d'un commutateur de puissance (6) pouvant être commandé, au moins l'une des premières (3) ou des deuxièmes (5) sorties de l'unité onduleur (1) peut être alimentée en énergie,
**caractérisée en ce que**
l'unité onduleur (1) présente au moins une branche de pont d'onduleur (2), dont la sortie (2') est reliée, au choix, à la première (3) ou à la deuxième (5) sortie de l'unité onduleur (1), par l'intermédiaire du commutateur de puissance (6) pouvant être commandé, et que l'unité onduleur (1) comprend une installation de commande (7) qui permet la distribution d'une tension alternative à fréquence variable, destinée à la commande d'un moteur électrique (11), par l'intermédiaire de la deuxième sortie (5).

2. Unité onduleur photovoltaïque selon la revendication 1, **caractérisée en ce que** l'unité onduleur (1) comprend deux ou trois branches de pont d'onduleur (2), qui, par leurs sorties (2'), sont reliées chacune à un commutateur de puissance (6), par l'intermédiaire desquels elles sont reliées, au choix, à la première (3) ou à la deuxième (5) sortie de l'unité onduleur (1).

3. Unité onduleur photovoltaïque selon revendication 1 ou 2, **caractérisée en ce que** l'installation de commande (7) commande aussi le / les commutateur(s) de puissance (6), connectés, côté sortie, en aval de la / des branche(s) de pont d'onduleur (2), pour la sélection de la première ou de la deuxième sortie (3, 5) respectivement activée.

4. Unité onduleur photovoltaïque selon l'une des revendications 1 à 3, **caractérisée en ce qu'**à l'au moins une branche de pont d'onduleur (2), côté entrée, est connecté, en amont, un circuit intermédiaire de tension continue (9) et qu'à celui-ci est connecté en amont un convertisseur DC/DC (8).
